(19) Europäisches Patentamt
European Patent Office
Office européen des brevets

(11) **EP 0 506 650 B1**

(12) **EUROPÄISCHE PATENTSCHRIFT**

(45) Veröffentlichungstag und Bekanntmachung des Hinweises auf die Patenterteilung:
**21.08.1996 Patentblatt 1996/34**

(51) Int Cl.6: **C08H 5/04**, C08L 99/00, C08B 30/10, C08L 5/06, B65D 65/46

(21) Anmeldenummer: **92890066.1**

(22) Anmeldetag: **20.03.1992**

(54) **Biologisch abbaubares Verpackungs- und/oder Hüll-Material und Verfahren zu seiner Herstellung**

Biodegradable packaging material and process for producing the same

Matériau d'emballage biodégradable et procédé pour l'obtenir

(84) Benannte Vertragsstaaten:
BE CH DE DK ES FR GB GR IT LI LU NL PT SE

(30) Priorität: **25.03.1991 AT 657/91**

(43) Veröffentlichungstag der Anmeldung:
**30.09.1992 Patentblatt 1992/40**

(73) Patentinhaber:
• **Berghofer, Emmerich, Dr. Dipl.-Ing.**
  **A-3021 Pressbaum (AT)**
• **Grzeskowiak, Bogdan, Dr.**
  **PL-60 158 Poznan (PL)**
• **Mundigler, Norbert, Dipl.-Ing.**
  **A-3423 St. Andrä/Wördern (AT)**
• **Schleining, Gerhard, Dr. Dipl.-Ing.**
  **A-1020 Wien (AT)**
• **Zenz, Helmut, Dr. Dipl.-Ing.**
  **A-1180 Wien (AT)**

(72) Erfinder:
• **Berghofer, Emmerich, Dr. Dipl.-Ing.**
  **A-3021 Pressbaum (AT)**

• **Grzeskowiak, Bogdan, Dr.**
  **PL-60 158 Poznan (PL)**
• **Mundigler, Norbert, Dipl.-Ing.**
  **A-3423 St. Andrä/Wördern (AT)**
• **Schleining, Gerhard, Dr. Dipl.-Ing.**
  **A-1020 Wien (AT)**
• **Zenz, Helmut, Dr. Dipl.-Ing.**
  **A-1180 Wien (AT)**

(74) Vertreter: **Wildhack, Helmut, Dipl.-Ing. Dr.**
**Patentanwälte Dipl.-Ing. Leo Brauneiss**
**Dipl.-Ing. Dr. Helmut Wildhack**
**Dipl.-Ing. Dr.Gerhard Jellinek**
**Landstrasser Hauptstrasse 50**
**Postfach 281**
**1031 Wien (AT)**

(56) Entgegenhaltungen:
DE-A- 2 133 572     FR-A- 2 213 962
GB-A- 2 201 684     US-A- 2 452 750

**Beschreibung**

Die Erfindung betrifft ein neues biologisch abbaubares Verpackungs - und/oder Hüll-Material auf Basis von pflanzlichen Abfall- und/oder Nebenprodukten, Verfahren zu dessen Herstellung und die Verwendung der zu ihm führenden Rohstoffe.

Im Zuge der Suche nach Wegen zur Lösung oder zumindest Verringerung der durch Verpackungs- und/oder Hüllmaterialien verursachten Abfallproblematik wurde immer wieder versucht, auf synthetischem Wege erzeugte Produkte dieses Sektors durch Modifikation der Polymere verrottungfähig zu machen oder derartige Verpackungsmaterialien gleich auf Basis von natürlichen, insbesondere von Pflanzen-Rohstoffen zu entwickeln.

Seit langem sind Papiere und Kartone mit hohen Anteilen von Zellulosen und oft beachtlichen Füll-stoffmengen bekannt, wobei der Zusammenhalt der Fasern durch Leimung erreicht wird. Vorteile von Papieren sind ihre Flexibilität und bei Einsatz entsprechender Zusätze auch ihre Reißfestigkeit, Nachteile ihre aufwendige, an ganz bestimmte natürliche Rohstoffquellen gebundene, trotz Anwendung neuer Technologien immer noch umweltschädigende Herstellung, ihr ohne Zusatz von Stoffen mit geringer biologischer Abbaubarkeit recht hohe Flüssigkeits-, insbesondere Wasser-Saugfähigkeit, ihre modernen Formgebungs-Prozessen, wie Thermoextrusion sowie einer Schweißbarkeit unzugängliche Textur, ihre, insbesondere für Verpackungszwecke oft störende Undurchsichtigkeit und letzten Endes auch eine relativ verzögerte biologische Abbaubarkeit.

Verschiedentlich wurde auch versucht, Verpackungsmaterialien auf Basis von Gelatinen und Stärken mit den verschiedensten Zusätzen herzustellen. Auffälliger Nachteil solcher Produkte sind ihre - ohne echte Modifikation auf chemischem Wege mit den einer solchen anhaftenden Nachteilen - Steifheit einerseits und unerwünschte Sprödigkeit andererseits.

Die Erfindung hat sich die Aufgabe gestellt, unter Vermeidung der beschriebenen Nachteile bekannter Produkte und ihrer Herstellung biologisch problemlos abbaubare Verpackungs- und Hüllmaterialien aus pflanzlichen Rohstoffen herzustellen, die, da sie selbst Abfälle und Rückstände aus meist organischen Produktionsprozessen im weitesten Sinne darstellen, bezüglich ihrer umweltgerechten Entsorgung selbst zu Problemstoffen zu werden drohen.

Es soll an dieser Stelle nicht unerwähnt bleiben, daß es aus einer größeren Anzahl von Druckschriften bekannt ist, pflanzliche Abfallprodukte zur Gewinnung von Zellwandpolysacchariden, insbesondere von Pektinen, einer Aufschlußbehandlung zu unterziehen und durch Extraktion das Pektin von den Rückständen abzutrennen.

So ist z.B. in Patent Abstracts of Japan, C-Field, Vol.9, Nr.331 (25.12.1985), Seite 84 C 321 die Extraktion von Pektin aus stärkehältigen Landwirtschaftsprodukten - wie Kartoffeln - und in der GB-A 2201684 die Gewinnung von Pektinen aus pflanzlichem Gewebe, insbesondere aus Zitrus-Schalen beschrieben, wobei jeweils ein enzymatischer Aufschluß des Pflanzenmaterials erfolgt.

Aus der CH-PS 653 690 ist die Extraktion von Pektinen aus extrahierten Zuckerrübenschnitzeln und aus der DE-OS 2133572 eine solche aus Citrusfruchtschalen bekannt geworden, wobei die Gewinnung und Abtrennung der Pektine durch chemisch-thermische Aufschlußbehandlung mit Säuren unterstützt wird.

Eine durch solchen Säure-Aufschluß und zusätzliche mechanische Energie unterstützte Pektin-Extraktion aus Fruchtmassen und pflanzlichen Preßrückständen beschreibt auch die US-PS 4370473.

Alle diese Druckschriften betreffen nur eine Extraktion der Pektine und die Abtrennung der Extrakte unter Zurücklassung der Extraktionsrückstände. Über eine Weiterverwertung der dabei in großen Mengen anfallenden pflanzlichen Extraktionsabfälle oder deren Einsatz zur Herstellung wertvoller Produkte ist in diesen Druckschriften nicht die geringste Aussage enthalten.

In der FR-A 2213962 wird zum Erhalt von für Verpackungszwecke geeigneten Materialien auf Basis von Pektin vorgeschlagen, eine Mischung von Pektin und Polyol miteinander umzusetzen und einer Trocknung zu unterwerfen. Es ist dort weiters vorgeschlagen, anstelle von reinem Pektin verschiedene pektinreiche, pflanzliche Abfallprodukte im genannten Gemisch mit Polyol einzusetzen. Eine Vorbehandlung zur Erhöhung der Gebrauchsfähigkeits-Dauer wird dort nicht erörtert.

Es wurde nun gefunden, daß die verschiedensten pflanzlichen Abfälle und/oder Rückstände der Agrar-, Futtermittel-, Getränke- und Lebensmittel-Industrie unter Nutzung der in ihnen enthaltenen Zellwandpolysaccharide insgesamt in optisch ansprechende, in ihren Eigenschaften die Produktpalette des Verpackungssektors durchaus bereichernde, benutzungsfreundliche Verpackungs- und Hüllmaterialien für die verschiedensten Zwecke umgewandelt werden können, wenn sie einen ausreichenden Gehalt an Zellwandpolysacchariden und/oder Lignin(en) aufweisen.

Gegenstand der Erfindung ist somit ein neues, biologisch abbaubares Verpackungs- und/oder Hüllmaterial der eingangs genannten Art, das dadurch gekennzeichnet ist, daß es mit einer formgebend behandelten, einen Wassergehalt von maximal 30 Masse-% aufweisenden bzw. auf diesen gebrachten Grundmasse gebildet ist, deren Matrix mit einer durch an sich bekannte chemisch-thermische und/oder enzymatisch-thermische Aufschlußbehandlung mindestens eines pflanzlichen Abfall- und/oder Nebenproduktes mit einem Anteil von - bezogen auf bzw. angegeben als Trockensubstanz(en) - mindestens 25 Masse-% an Zellwandpolysacchariden, insbesondere aus der Gruppe der Zellulose(n), Hemizellulose(n), Pentosan(e) und Pektin(e), und/oder an Lignin(en) gewonnenen Aufschlußgesamtmasse mit musartiger Konsistenz („Mus") gebildet ist.

Alternativ oder zusätzlich kann die Formgebung in vorteilhafter Weise unter Druck- und/oder Temperatureinwirkung erfolgt sein, kann die Grundmasse nur maximal 15 Masse% Wassergehalt aufweisen oder es kann ein pflanzliches Abfall - und/oder Nebenprodukt mit einem Anteil an Zellwandpolysaccharid(en) bzw. Lignin(en) von mindestens 50 Masse% eingesetzt sein, wie gemäß **Anspruch 2** vorgesehen.

Die angebene Aufschlußbehandlung kann noch durch eine mechanische Aufschlußbehandlung ergänzt sein.

Die neuen Produkte zeichnen sich je nach Ausgangs- und Zusatzmaterialien durch Flexibilität, Knitterfreiheit, Elastizität, Plastizität, Zähigkeit, Reißfestigkeit, glatte oder rauhe Oberfläche, hohe Homogenität, Transparenz oder Opazität und steuerbare Wasserfestigkeit aus und können in jeder für Verpackungsmaterialien üblichen Form vorliegen, also z.B. als geprägte oder glatte Folien, Blätter, Platten, Bahnen oder "Kartone", jeder Dicke, als stoß-, lärm- und wärmedämmende Schaumstoff-Folien oder - Formkörper, gewünschtenfalls mit an ein zu schützendes Gut angepaßter Form, aber auch als Verpackungshilfsmittel in Form von Sphäroiden, Sattelkörpern, "Chips" od. dgl. Sie haben den Vorteil, problemlos lackiert, beschichtet, beschriftet, bedruckt, kaschiert und verklebt zu werden, letztenfalls ist äußerst haltbare Verschweißung möglich, durch Einstellung des Wassergehaltes kann sogar Oberflächenhaftfähigkeit erreicht werden.

Die neuen Materialien sind weiters tieftemperaturbeständig und verspröden bei Gefrierschranktemperaturen nicht, sie sind weiters mikrowellenfest, womit sie sich auch für alle Zwecke moderner Lebensmittelverpackung hervorragend eignen. Zusätzlich sei erwähnt, daß sich die neuen Produkte auf Basis der Zellwandpolysaccharide als wesentlich besser plastifizierbar als ähnliche Produkte auf Stärkebasis erwiesen haben, was deren Primär-Verarbeitung, also Formgebung unmittelbar nach Bildung der heißen Grundmasse, z.B.: zwischen Walzen, beim Extrudieren, gegebenenfalls mit Blasformen und auch beim Spritzgießen erleichtert. Diese Eigenschaftsverbesserung wirkt sich aber auch bei einer Sekundärformgebung, also nach Vorliegen eines noch heißen Vorformkörpers, z.B.: einer Rohfolie , welche biegegeformt oder gereckt und/oder geprägt wird, aus. Eine solche sekundäre Formgebung kann auch auf Basis eines vorher produzierten, zwischengelagerten, "kalten" Vorformkörpers erfolgen, und zwar nach einer Erhöhung von dessen Feuchtegehalt und/oder Temperatur.

Bei einer Verarbeitung der frischgebildeten Grundmasse in Formen, z.B.: beim Spritzgießen, zeigte sich eine wesentliche Arbeitsvereinfachung infolge eines wesentlich formungsfreudigeren Verhaltens der neuartigen Masse im Vergleich zu überwiegend Stärkebasis aufweisenden Massen.

Neben der Gewinnung der beschriebenen wertvollen Produkte bringt die Erfindung den wesentlichen Vorteil, auch zur Lösung der Problematik der Deponierung bzw. Kompostierung von pflanzlichen Abfallprodukten aus der Landwirtschafts- und Lebensmittelproduktion beizutragen, indem diese Abfälle und Rückstände in den Produktionskreislauf zurückgebracht werden und diesen erst nach entsprechender Gebrauchsdauer als dann wesentlich leichter verrottbare Produkte verlassen.

Wesentlicher Faktor zur Erreichung der günstigen Basiseigenschafen stellt die vorangegangene, auf die Gesamt-Abfallmasse gezielt angewandte Aufschlußbehandlung dar, durch welche trotz hoher Flexibilität bei der Wahl der jeweiligen pflanzlichen Abfall- bzw. Rückstandsmaterialien gleichmäßige und reproduzierbare Endproduktsqualitäten erzielbar sind.

Keineswegs zuletzt anzuführender, positiver Effekt des speziellen Aufschlusses ist neben einer wesentlichen Reduktion der bei üblicher Pektin-Extraktion verbleibenden Abfälle, die rasche Verrottbarkeit des neuen Materials, die schon nach relativ kurzer Deponie in stärker feuchter Umgebung beginnt und dann rasch fortschreitet.

Zur Erreichung jeweils gewünschter mechanischer, verschleißtechnischer, optischer und sonstiger Eigenschaften der neuen Materialien ist es günstig, wenn in das neue Hüllmaterial Zusätze, wie sie im **Anspruch 3** angegeben sind, integriert sind.

Sowohl vom Standpunkt der Entsorgung als auch hinsichtlich wirtschaftlicher Faktoren sind neue Hüllmaterialien auf Basis der im **Anspruch 4** genannten pflanzlichen Rückstände von Vorteil. Zusätzlich sollen hier konkret neben Preß-Trestern, z.B.: von Wein und Kernobst, Citrusfrucht- und Bananenschalen genannt sein.

Besonders günstige elasto-plastische Eigenschaften und oder Flexibilität mit steuerbarer Rückstellkraft zeichnen die neuen Produkte aus, wenn ihre Grundmasse mindestens einen der im **Anspruch 5** angeführten Weichmacher umfaßt. Die genannten Substanzen bilden Brücken zwischen den durch die Aufschlußbehandlung gezielt veränderten Zellwandpolysaccharid-Ketten aus.

Enthalten die neuen verpackungsprodukte mindestens einen der im **Anspruch 6** beschriebenen Füllstoffe, können in vorteilhafter Weise ganz gezielt Armierung, Oberflächenrauheit, Versteifung, Opaleszenz und dgl. gesteuert werden. Als Füllstoffe kommen alle für diesen Zweck bekannten, wirtschaftlich tragbaren Stoffe dieses Sektors in Frage. Es soll an dieser Stelle darauf verwiesen werden, daß diese Substanzen schon von den Ausgangsstoffen selbst herrühren können, wie z.B. Einschlüsse, Zellulosefasern und dgl. Die Füllstoffe und Fasern können biogenen, mineralischen oder synthetischen Ursprungs sein.

In vielen Fällen hat das neue Produkt von den Ausgangsstoffen her schon eine gewisse Eigenfärbung. Diese läßt sich nach der zusätzlichen oder fakultativen Ausführungsvariante gemäß diesem **Anspruch 6** verstärken und/oder variieren. Es können sowohl in Substanz färbende als auch Pigmentfarbstoffe in die neuen Hüllmaterialien bzw. in dessen Grundmasse integriert sein.

Um zu den neuen Verpackungs- und/oder Hüllmaterialien zu gelangen, hat sich ein Verfahren, wie es im **Anspruch 7** wiedergegeben ist, als besonders bevorzugt erwiesen. Dabei ist - trotz der Notwendigkeit eines späteren, zumindest teilweisen Wasserentzuges - die Gegenwart von genügend Wasser eine wichtige Voraussetzung, aus der allerdings erst durch eine zusätzliche, mit Temperatur-Erhöhung verkoppelte, chemische bzw. enzymatische Aufschlußbehandlung der erfolgreiche Erhalt der neuen, besonders vorteilhaften Materialien resultiert.

Wie gefunden wurde, wird dabei der volle Erfolg durch die synergistische Wirkung einer über die im **Anspruch 7** genannten Mindestgrenzen hinaus vorangetriebene Wasserlöslichkeit der Gesamt-Zellwandpolysaccharide sichergestellt. Schließlich ist auch der Endgehalt an Wasser von wesentlicher Bedeutung für die neuen Hüllmaterialien - er soll 30 Masse-%, bezogen auf Gesamt-Materialmasse, vorzugsweise 15 Masse-%, nicht übersteigen, üblicherweise liegt er bei schon flexiblen Produkten im Bereich von 10-13 Masse-%.

Bevorzugte- weil einerseits entsorgungsproblematische und andererseits in großen Mengen anfallende- für den Einsatz im erfindungsgemäßen Verfahren besonders geeignete, pflanzliche Rückstände und/oder Abfälle sind ebenfalls, im **Anspruch 7** genannt. Es seien daneben, weil gegebenenfalls infolge ihres oft dezentralen Anfallens nicht so günstig, Preßrückstände der Obst-mosterzeugung, Weintrester und Obstschalen genannt.

Die bevorzugte Herstellungs-Verfahrensweise gemäß **Anspruch 8** hat den Vorteil einer raschen Erreichung der angestrebten musartigen Konsistenz der Grundmasse unter Einsatz billiger Grundchemikalien bzw. naturnaher organischer Säuren. Dabei hat sich gezeigt, daß die Art der Aufschlußsäure einen Einfluß auf die Endproduktsqualität haben kann, z.B. erhöht ein chemisch-thermischer Aufschluß der pflanzlichen Ausgangsstoffe mit Phosphorsäure in bemerkenswerter Weise die Zähigkeit der erhaltenen Hüllmaterialien, Salzsäure fördert die Verarbeitbarkeit des zu bildenden Muses in der Herstellungsphase. Die Säuren werden als verdünnte wässrige Lösungen im wesentlichen mit Gehalten im Bereich um etwa 1 Masse-% oder darunter in zumindest gleicher Menge wie das jeweils aufzuschließende Pflanzenmaterial eingesetzt.

Besonders schonend ist jehe umweltfreundliche Verfahrensweise, welche **Anspruch 9** angibt, wobei gegebenenfalls sogar selektive Estergruppen-Abspaltungen, die z.B. für spätere Modifikation, z.B. durch Weich-machermoleküle günstig ist, erreicht werden kann.

Die Vorteile und technischen Effekte der jeweils von den **Anspruch 10** umfaßten, vorteilhaften Ausgestaltungen und Ausführungsweisen des erfindungsgemäßen Herstellungs-Prozesses sind schon vorher im Zusammenhang mit den die neuen Verpackungsmaterialien selbst betreffenden Ansprüchen, auf die dort verwiesen ist, erläutert worden.

Es wurde weiters gefunden, daß es besonders für eine glatte, die Formgebung begünstigende Konsistenz günstig ist, wenn eine Feinzerkleinerung gemäß **Anspruch 11** vorgenommen wird.

Wenn in vorteilhafter Weise, wie gemäß einer durch **Anspruch 12** gegebenen Variante vorgesehen, Formgebung und Trocknung einander überlappend erfolgen, kann die Einstellung des gewünschten Wassergehaltes verkürzt werden; dies erfolgt z.B. bei einem Walzentrocknungsverfahren zur Herstellung eines Films des neuen Hüllmaterials.

Einen ganz besonderen Vorteil der neuen Materialien, die hinsichtlich ihrer Manipulierbarkeit und mechanischen Eigenschaften zumindest Papieren und Pappe entsprechen und sie z.B. bezüglich Optik durchaus übertreffen, besteht in deren thermoplastischer Verformbarkeit - teilweise sogar Tiefziehfähigkeit. Dementsprechend ist es besonders vorteilhaft, einer thermoplastischen Formgebung bei Ihrer Herstellung den Vorzug zu geben. Die Thermoplastizität schließt in sich als weiteren Vorteil die - hervorragenden Materialschluß sicherstellende - Verschweißbarkeit der neuen Materialien dar.

Besonders vorteilhaft, weil keine besonderen Investitionen in den Maschinenpark erfordernd, ist es, Formgebung und Trocknung der Mus-Masse mittels Walzentrockner und/oder Extruder vorzunehmen. Dabei können bei deren Kombination auf dem Walzentrockner etwa Flocken der Grundmasse erhalten werden, die ihrerseits, gegebenenfalls unter Zusatz von Additiven, wie oben beschrieben, einer Presse oder Extruderschnecke zugeführt werden.

Schließlich ist die besonders umweltfreundliche und entsorgungsgünstige Verwendung der pflanzlichen Rückstands, Abfall- und/oder Nebenprodukte gemäß **Anspruch 15** ein wesentlicher Gegenstand der Erfindung, zumal diese wie vorher erläutert, zu einem konsumenten- und umweltfreundlichen Verpackungsstoff führen.

Anhand der folgenden Beispiele wird die Erfindung erläutert:

Beispiel 1:

2 kg extrahierte, ausgepreßte Zuckerrübenschnitzel (26% TS = Trockensubstanz) wurden mit 3 l einer 0,8%-igen $H_2SO_4$ gemischt, auf 90°C vorerhitzt und im kochenden Wasserbad unter Rühren hydrolysiert. Nach der Hydrolyse wurde das erhaltene Mus auf 25°C abgekühlt, mit Wasser auf 2,5% TS verdünnt, 3 min lang mit einem Homogenisator ("Ultra-Turrax") homogenisiert, mit NaOH auf pH 3,0 eingestellt. Das etwa 80°C heiße Mus wurde in einem Umlufttrockenschrank bei 80°C auf Metallschalen (30x20x1cm) mit Teflonbeschichtung getrocknet (Flächenbelastung 7,2 kg/m$^2$). Wassergehalt der erhaltenen transparenten Folie: etwa 12,5 Masse -%.

Beispiel 2:

5 kg extrahierte, ausgepreßte Zuckerrübenschnitzel wurden mit 7,3 kg einer 0,724% -igen HCl gemischt, und in einem Autoklaven 2 h lang bei 120°C hydrolysiert, mit einer Großküchenmaschine mit Fleischwolfaufsatz zerkleinert und mit NaOH auf pH 3,0 eingestellt.

Das erhaltene Mus wurde mit einem Homogenisator (oder einer Zahnkolloidmühle) bei 100 bar homogenisiert. Dem Mus wurden, bezogen auf TS, 20 Masse-% Glycerin zugesetzt. Ein Teil dieser Mischung wurde nun auf 2.5% TS verdünnt und in einem Umlufttrockenschrank bei 80°C auf Metallschalen mit Teflonbeschichtung wie gemäß Beispiel 1 getrocknet (Flächenbelastung 7,2 kg/m$^2$). Wassergehalt der erhaltenen Folie: etwa 13,2 Masse-%.

Dem verbleibenden Rest wurden 50 Masse-% Kartoffelmehl (Kartoffelstärke, Reismehl) bezogen auf TS zugesetzt. Diese Mischung wurde dann mit einem dampfbeheizten Walzentrockner bei 2 bar Dampfdruck getrocknet. Die erhaltene Folie wurde geschnitten und konnte mit einem handelsüblichen Folienschweißgerät problemlos zu haltbaren Säckchen verschweißt werden.

Beispiel 3:

3 kg getrockneter und gemahlener Apfeltrester (87% TS) wurden in Wasser suspendiert und auf 8% TS verdünnt, mit einem Homogenisator 3 min lang auf 100 Mikrometer max. homogenisiert, mit HCl auf pH 1,5 eingestellt und 1 h lang bei 120°C autoklaviert.

Nach der Hydrolyse wurden die Proben auf 4% TS verdünnt und mit NaOH auf pH 3,0 eingestellt, und im Umlufttrockenschrank bei 80°C auf Metallschalen mit Teflonbeschichtung getrocknet (Flächenbelastung: 4,5 kg/m$^2$). Wassergehalt der erhaltenen Folie: 11,8 Masse -%.

Die Muster aus den Beispielen 1-3 bildeten ab etwa 65° C thermoplastisch verformbare, teil-transparente Folien. Diese wurden nach Einstellung eines konstanten $a_W$-Wertes von 0,3 ($a_w$ = Wasseraktivität) mit einer Texturprüfmaschine "Instron 1140" auf ihre Eigenschaften untersucht und mit konventionellen Packstoffen verglichen. Die Ergebnisse sind in Tabelle 2 im Anschluß an die Beispiele zusammengefaßt.

Beispiel 4: (Vergleichsbeispiel, nicht erfindungsgemäß)

2 kg extrahierte, ausgepreßte Zuckerrübenschnitzel (26% TS) wurden auf 90°C vorerhitzt und in einem kochenden Wasserbad 1,5 h lang erhitzt. Danach wurden die Schnitzel in einem Homogenisator zerkleinert, auf 2,5% TS verdünnt und im Umlufttrockenschrank bei 80°C auf Metallschalen mit Teflonbeschichtung getrocknet (Flächenbelastung: 7,5 kg/m$^2$). Es bildete sich keine Folie, sondern bloß eine unzusammenhängende, krümelige Masse.

Beispiel 5:

Extrahierte, ausgepreßte Zuckerrübenschnitzel (26% Trockensubstanz TS) wurden mit einer Großküchenmaschine mit Fleischwolfaufsatz zerkleinert, und in einem Cincinnati-Milacron Extruder CM 45 thermisch vorbehandelt (Schnecke 300, Düse 2x1mm, Massetemperatur 130°C) auf 40°C abgekühlt, mit einer Mischung von zellwandpolysaccharid-abbauenden Enzymen (1% Enzym auf TS) und in einem Thermoreaktor unter Rühren 24-144 Stunden bei 40°C erhitzt. Das so erhaltene Hydrolysat wurde mit 50 Masse-% Kartoffelmehl bezogen auf TS gemischt und mit einem Walzentrockner getrocknet. Das Trockenprodukt wurde gemahlen und extrudiert (Schnecke 400, Düse 100x1mm, Massetemperatur 100°C). Während der Extrusion wurden rund 25 Masse-% Glycerin bezogen auf TS direkt in den Zylinder eingebracht. Die erhaltene Folie wurde in einer hydraulischen Presse in eine Schalenform gepreßt.

Zur Bestimmung des Wasserlöslichkeits- und Wasserabsorptions-Indexes der Muster aus den Beispielen 1-4 wurde die von Richter et al. ("Ausgewählte Methoden der Stärkechemie", Wiss. Verlagsbuchhandlung Stuttgart, 1968) angeführte Methode verwendet. Dazu wurden die getrockneten Muster aus den Beispielen 1-4 auf unter 100 Mikrometer zerkleinert und von den Pulvern je 5 g Trockensubstanz in 100 ml-Zentrifugenbecher eingewogen, mit 60 ml Wasser versetzt und mit einem Stabhomogenisator homogenisiert, auf 100 ml aufgefüllt, 30 min bei 30°C mit Magnetrührer gerührt und bei ca.2000 g abzentrifugiert. Der Überstand wurde zur Bestimmung der gelösten Trockensubstanz eingedampft und getrocknet.

Berechnungsformeln:

$$\text{Wasserlöslichkeitsindex (WLI)} = \frac{\text{getrockneter Überstand (g) x100}}{\text{Einwaage (g TS)}}$$

$$\text{Wasserabsorptionsindex (WAI)} = \frac{\text{Gelgewicht (g) - Einwaage (g TS)}}{\text{Einwaage (g TS)}}$$

Tabelle 1 zeigt die Versuchergebnisse.

Zusammenfassung der Ergebnisse:

Tabelle 1

| Ergebnisse der Bestimmung des Wasser- löslichkeits-(WLI) und des Wasserabsorptions-Indexes (WAI). | | |
|---|---|---|
| Muster | WLI (%) | WAI (%) |
| Beispiel 1 | 37,3 | 14,2 |
| Beispiel 2 | 45,2 | 19,7 |
| Beispiel 3 | 38,5 | 20,4 |
| Beispeil 4 | 6,3 | 6,7 |

Tabelle 2:

| | FG [g/m$^2$] | Dichte [g/cm$^3$] | Ed [MPa/mm]10$^{-3}$ | $\in$R [%] | $\sigma$R [N/mm$^2$] | Fr/Fo [%] |
|---|---|---|---|---|---|---|
| Untersuchung der Folieneigenschaften durch einen einachsigen Reißversuch nach DIN 53455 bzw. einen einachsigen Zugversuch mit anschließender Relaxationsmessung gemäß DIN 53455 und 1) und 2) | | | | | | |
| MUSTER 1 | 240 | .80 | 19.0 | 3 | 30 | 80 |
| MUSTER 2 | 230 | 1.15 | 5.0 | 25 | 19 | 55 |
| MUSTER 3 | 800 | 1.30 | .2 | 26 | 3 | 45 |
| PAPIER | 70 | .70 | 14.0 | 3 | 15 | 80 |
| PACKPAP | 43 | .43 | 12.0 | 6 | 19 | 75 |
| ALU | 32 | .65 | 12.0 | 2 | 10 | 95 |
| UL700 | 15 | .91 | 17.0 | 21 | 50 | 80 |
| XOP | 16 | .93 | 5.0 | 60 | 45 | 80 |
| OPP | 23 | .93 | 16.0 | 6 | 35 | 85 |
| OPPC | 23 | .91 | 30.0 | 31 | 160 | 80 |

Codierung der Vergleichsmuster (Kunststoffolien: Muster der Firma Foli-Pack), Handelsware)

PAPIER : Schreibpapier
PACKPAP : handelsübliches Packpapier
ALU : handelsübliche Alufolie (ALUFIX)
UL700 : ULTRALEN UL 700 (Polypropylen Schrumpffolie gelocht)
XOP : extraorientierte Polyolefin Schrumpffolie
OPP : Polypropylen biaxial gereckt, beidseitig acrylbeschichtet, lackiert
OPPC : Polypropylen biaxial gereckt, coextrudiert beschichtet

Einachsiger Reißversuch nach DIN 53455 bzw.
Einachsiger Zugversuch mit anschließender Relaxations-messung nach DIN 53455 und 1) und 2):

1) M. Peleg: Characterization of the stress relaxation curves of solid foods, J.Food.Sci, Vol.44, No.1 (1979), p. 277-281

2) G. Schleining: Aspekte mechanischer Texturmessung bei festen Lebensmitteln, Ernährung/Nutrition, Vol.13/Nr. 10 (1989), p.585-590

Gerät: INSTRON Universalprüfmaschine Type 1140
Probekörper : Ao= 21.0 cm$^2$ , Lo= 50.0 mm
Prüfgeschwindigkeit: VJ= 50 mm/min

Meßgrößen:

FG      Flächengewicht

Ed      Deformationsmodul, Anstieg der Spannung pro mm Dehnung, Maß für die Steifigkeit

$\in$R      Reißdehnung = Reißweg*100/Lo, Dehnung bei welcher der Probekörper reißt, angegeben in % der Meßlänge

σR      Reißfestigkeit, Spannung bei welcher der Probekörper reißt, bezogen auf die Querschnittsfläche (10mmxFolienstärke)

Fr/Fo      Relative Elastizität, (Fo = relaxierende Kraft, Fr = unrelaxierte Kraft), Maß für die Elastizität bzw. für die Formbeständigkeit: schwankt zwischen 0 und 100%: 100 = rein elastisch, geht nach Aufhebung der Verformung vollkommen in die Ausgangsgestalt zurück; 0 = plastisch, behält nach Aufhebung der Verformung die verformte Gestalt

**Patentansprüche**

1.  Biologisch abbaubares Verpackungs- und/oder Hüllmaterial auf Basis von polysaccharidreichen pflanzlichen Abfall- und/oder Nebenprodukten, dadurch gekennzeichnet, daß es mit einer formgebend behandelten, einen Wassergehalt von maximal 30 Masse-% aufweisenden bzw. auf diesen gebrachten Grundmasse gebildet ist, deren Matrix mit einer durch an sich bekannte chemisch-thermische und/oder enzymatisch-thermische, sowie gegebenenfalls mechanische, Aufschlußbehandlung mindestens eines pflanzlichen Abfall- und/oder Nebenproduktes mit einem Anteil von - bezogen auf bzw. angegeben als Trockensubstanz(en) - mindestens 25 Masse-% an Zellwandpolysacchariden, insbesondere aus der Gruppe der Zellulose(n), Hemizellulose(n), Pentosan(e) und Pektin(e), und/oder an Lignin(en), gewonnenen Aufschluß-Gesamtmasse mit musartiger Konsistenz („Mus") gebildet ist.

2.  Verpackungs- und/oder Hüllmaterial nach Anspruch 1, dadurch gekennzeichnet, daß es unter Druck- und/oder Temperatureinwirkung formgebend behandelt ist und/oder mit einer Grundmasse mit einem Wassergehalt von maximal 15 Masse-% und/oder mit einem pflanzlichen Abfall bzw. Nebenprodukt mit einem Anteil von - bezogen auf bzw. angegeben als Trockensubstanz(en) - mindestens 50 Masse-% an Zellwandpolysacchariden und/oder Lignin(en) gebildet ist.

3.  Verpackungs- und/oder Hüllmaterial nach Anspruch 1 oder 2, dadurch gekennzeichnet, daß in die Grundmasse - jeweils bezogen auf Trockensubstanz(en) - 0,5-150 Masse-% mindestens eines Additivs aus der Gruppe der zellwandpolysaccharid-kompatiblen Weichmacher, Füllstoffe und Farbstoffe integriert sind.

4.  Verpackungs- und/oder Hüllmaterial nach einem der Ansprüche 1 bis 3, dadurch gekennzeichnet, daß dessen Grundmasse mit dem durch eine wie im Anspruch 1 genannte, an sich bekannte Aufschlußbehandlung von Rückständen und/oder Abfällen einer Pressung und/oder Ausschlämmung und/oder Extraktion und/oder sonstigen Verarbeitung pflanzlicher Rohstoffe, bevorzugt durch Aufschluß von Zuckerrübenschnitzeln, Obst- und Gemüse-Verarbeitungs-Rückständen, Rückständen der Fett- und/oder Ölgewinnung aus pflanzlichem Material und/oder Kartoffelpülpe, gewonnenen Mus gebildet ist.

5.  Verpackungs- und/oder Hüllmaterial nach einem der Ansprüche 1 bis 4, dadurch gekennzeichnet, daß dessen Grundmasse - jeweils bezogen auf Trockensubstanz(en) - 10-100 Masse-%, vorzugsweise 25-80 Masse-% mindestens eines Weichmachers aus der Gruppe Glykol, Glycerin, Ethylenglykol, Propylenglykol, Polyethylenglykol, Polyproylenglykol, niedermolekulare Polyole, Monozucker, niedermolekulare Kohlenhydrate und Oligosaccharide bzw. die genannten Substanzen als wesentliche Komponenten enthaltende Stoffe aufweist.

6.  Verpackungs- und/oder Hüllmaterial nach einem der Ansprüche 1 bis 5, dadurch gekennzeichnet, daß dessen Grundmasse 5-50 Masse-% mindestens eines Füllstoffes aus der Gruppe der schwerlöslichen Salze, Mehle (Stärke) und Fasern und/oder 0,01-5 Masse-% mindestens eines Farbstoffes aufweist.

7.  Verfahren zur Herstellung von neuen, biologisch abbaubaren Verpackungs- und/oder Hüllmaterialien auf Zellwandpolysaccharid-Basis, nach einem der Ansprüche 1 bis 6, wobei pflanzliches Abfallmaterial einer chemisch-thermischen und/oder enzymatischthermischen Abfallbehandlung unterworfen wird, dadurch gekennzeichnet, daß die pflanzlichen Abfall- und/oder Nebenprodukte, bevorzugt aus der Gruppe extrahierte Zuckerrübenschnitzel, Preßrückstände, Rückstände oder Abfälle der Obst- und Gemüseverarbeitung, Kartoffelpülpe und Preß- und Extraktionsrückstände der Gewinnung oder Verarbeitung von Fetten bzw. Ölen aus pflanzlichen Rohstoffen, in Gegenwart oder nach Zugabe von Wasser bis zur Erreichung einer Wasserlöslichkeit von deren Zellwandpolysacchariden von mindestens 15 Masse-% einem der genannten Aufschlüsse unterzogen werden, wobei im Falle einer Zugabe mindestens eines Additivs aus der Gruppe der Weichmacher, Füllstoffe und Farbstoffe diese bevorzugt nach dem genannten Aufschluß erfolgt, und daß die gesamte, auf diese Weise erhaltene, musartige Konsistenz aufweisende Grundmasse („mus") mindestens einem Formgebungs- und Wassergehalt-Einstellungs-Trocknungsprozeß unterworfen wird.

8.  Verfahren nach Anspruch 7, dadurch gekennzeichnet, daß der chemischthermische Aufschluß der pflanzlichen Abfall- und/oder Nebenprodukte durch Zusatz von wässerigen Lösungen von Mineralsäuren und/oder organischen Säuren vorgenommen wird, wobei ein pH-Wert-Bereich von 0,5 bis 6, vorzugsweise von 1,0 bis 3,0, eingestellt bzw. eingehalten wird, und die thermische Behandlung bei Temperaturen von 50 bis 200°C, vorzugsweise von 70 bis 130°C bei einer Dauer von 5 min bis 5h, vorzugsweise von 1 bis 2h, durchgeführt wird.

9.  Verfahren nach Anspruch 7, dadurch gekennzeichnet, daß der enzymatischthermische Aufschluß des pflanzlichen Rohstoffes mit einem Enzymgemisch mit Hydrolasen aus der Gruppe der Zellulasen, Hemizellulasen, Glucanasen und Pektinasen, bei Temperaturen von 25-80°C, vorzugsweise von 40-70°C, durchgeführt wird.

10. Verfahren nach einem der Ansprüche 7 bis 9, dadurch gekennzeichnet, daß die Additive aus der in Anspruch 7 genannten Gruppen in einer Menge von insgesamt 0,5-150 Masse-%, jeweils bezogen auf Trockensubstanz, zugesetzt werden, wobei die Mengen an Weichmachern, Füll- und Farbstoffen, die aus den in den Ansprüchen 4 bis 6 genannten Gruppen stammen, jeweils in den in diesen Ansprüchen genannten Mengen zugesetzt werden.

11. Verfahren nach einem der Ansprüche 7 bis 10, dadurch gekennzeichnet, daß die pflanzlichen Abfall- und/oder Nebenprodukte zur Musherstellung vor, während und/oder nach dem Aufschluß einer mechanischen Feinstzerkleinerung unterworfen werden.

12. Verfahren nach einem der Ansprüche 7 bis 11, dadurch gekennzeichnet, daß Formgebung und Trocknung der Grundmasse sequentiell oder zeitlich einander zumindest zum Teil überlappend vorgenommen werden.

13. Verfahren nach einem der Ansprüche 7 bis 12, dadurch gekennzeichnet, daß eine thermoplastische Primär- oder Sekundär-Formgebung der Grundmasse mit Spritzgießen, Blasformen, Tiefziehen bzw. Prägen vorgenommen wird.

14. Verfahren nach einem der Ansprüche 7 bis 13, dadurch gekennzeichnet, daß Formgebung und/oder Trocknung mittels Walzentrockner und/oder Extruder vorgenommen wird bzw. werden.

15. Verwendung von pflanzlichen Abfall- und/oder Nebenprodukten zur Herstellung von neuen, biologisch abbaubaren Verpackungs- und/oder Hüllmaterialien auf Zellwandpolysaccharid-Basis gemäß einem der Ansprüche 1 bis 6 nach einem Verfahren gemäß einem der Ansprüche 7 bis 14.

## Claims

1.  Biodegradable packaging and/or covering material based on polysaccharide-rich vegetable waste products and/ or byproducts, characterized in that it is formed with a base material ("puree") which is treated by a shaping procedure and has a water content of not more than 30% by weight or is brought to this water content and whose matrix is formed with a digested total material of puree-like consistency, obtained by chemical-thermal and/or enzymatic-thermal and optionally mechanical digestion treatment, known per se, of at least one vegetable waste product and/or byproduct containing at least 25% by weight - based on or expressed as dry substance(s) - of cell wall polysaccharides, in particular from the group consisting of the cellulose(s) , hemicellulose(s), pentosan(s) and pectin(s), and/or of lignin(s).

2.  Packaging and/or covering material according to Claim 1, characterized in that it is treated by a shaping procedure under the action of pressure and/or heat and/or is formed with a base material having a water content of not more than 15% by weight and/or with a vegetable waste or byproduct containing at least 50% by weight - based on or expressed as dry substance(s) - of cell wall polysaccharides and/or lignin(s).

3.  Packaging and/or covering material according to Claim 1 or 2, characterized in that 0.5- 50% by weight - based in each case on dry substance(s) - of at least one additive from the group consisting of the plasticizers, fillers and colorants compatible with cell wall polysaccharides are integrated in the base material.

4.   Packaging and/or covering material according to any of Claims 1 to 3, characterized in that its base material is formed with the puree obtained by a digestion treatment, as stated in Claim 1 and known per se, of residues and/or wastes from pressing and/or elutriation and/or extraction and/or other processing of vegetable raw materials, preferably by digestion of sugar beet chips, fruit and vegetable processing residues, residues from fat and/or oil production from vegetable material and/or potato pulp.

5.   Packaging and/or covering material according to any of Claims 1 to 4, characterized in that its base material contains - based in each case on dry substance(s) - 10-100% by weight, preferably 25-80% by weight, of at least one plasticizer from the group consisting of glycol, glycerol, ethylene glycol, propylene glycol, polyethylene glycol, polypropylene glycol, low molecular weight polyols, monosugars, low molecular weight carbohydrates and oligosaccharides, or materials containing the stated substances as essential components.

6.   Packing and/or covering material according to any of Claims 1 to 5, characterized in that its base material contains 5-50% by weight of at least one filler from the group consisting of the sparingly soluble salts, meals (starch) and fibres and/or 0.01-5% by weight of at least one colorant.

7.   Process for the preparation of novel, biodegradable packaging and/or covering materials based on cell wall polysaccharides, according to any of Claims 1 to 6, vegetable waste material being subjected to a chemical-thermal and/or enzymatic-thermal digestion treatment, characterized in that the vegetable waste products and/or byproducts, preferably from the group consisting of extracted sugar beet chips, pressing residues, residues or wastes from fruit and vegetable processing, potato pulp and pressing and extraction residues from the production or processing of fats or oils from vegetable raw materials, are subjected to one of the stated digestions in the presence of water or after the addition of water until their cell wall polysaccharides have reached a water solubility of at least 15% by weight, in the case of the addition of at least one additive from the group consisting of the plasticizers, fillers and colorants said addition preferably being effected after the stated digestion, and that the total base material ("puree") obtained in this manner and having a puree-like consistency is subjected to at least one shaping process and at least one drying process for adjusting the water content.

8.   Process according to Claim 7, characterized in that the chemical-thermal digestion of the vegetable waste products and/or byproducts is carried out by the addition of aqueous solutions of mineral acids and/or organic acids, a pH range of from 0.5 to 6, preferably from 1.0 to 3.0, being established or being maintained, and the thermal treatment is carried out at temperatures from 50 to 200°C, preferably from 70 to 130°C, over a period of from 5 min to 5 h, preferably from 1 to 2 h.

9.   Process according to Claim 7, characterized in that the enzymatic-thermal digestion of the vegetable raw material is carried out using an enzyme mixture comprising hydrolases from the group consisting of cellulases, hemicellulases, glucanases and pectinases, at temperatures of 25-80°C, preferably of 40-70°C.

10.   Process according to any of Claims 7 to 9, characterized in that the additives from the groups stated in Claim 7 are added in a total amount of 0.5-150% by weight, based in each case on dry substance, the plasticizers, fillers and colorants which originate from the groups stated in Claims 4 to 6 each being added in the amounts stated in these claims.

11.   Process according to any of Claims 7 to 10, characterized in that the vegetable waste products and/or byproducts for puree production are subjected to very fine mechanical comminution before, during and/or after the digestion.

12.   Process according to any of Claims 7 to 11, characterized in that shaping and drying of the base material are carried out sequentially or at least partly overlapping one another with respect to time.

13.   Process according to any of Claims 7 to 12, characterized in that a primary or secondary thermoplastic shaping of the base material is carried out by injection moulding, blow moulding, deep drawing or embossing.

14.   Process according to any of Claims 7 to 13, characterized in that shaping and/or drying is or are carried out by means of drum dryers and/or extruders.

15.   Use of vegetable waste products and/or byproducts for the production of novel, biodegradable packaging and/or covering materials based on cell wall polysaccharides, according to any of Claims 1 to 6, by a process according to any of Claims 7 to 14.

**Revendications**

1. Matérial d'emballage et/ou d'enveloppement décomposable biologiquement, à base de produits de déchets et/ou de sous-produits végétaux riches en polysaccharides, caractérisé en ce qu'il est constitué d'une masse de base traitée de façon à lui conférer une forme, présentant une teneur en eau maximale de 30 % en poids, respectivement portée à une telle teneur en eau, masse de base dont la matrice est constituée par une masse globale de désagrégation, ayant une consistance en mousse ("mousse") et obtenue par un traitement, connu en soi, chimico-thermique et/ou enzymatico-thermique ainsi que, le cas échéant, mécanique, d'au moins un produit de déchets et/ou un sous-produit végétal, avec une proportion d'au moins 25 % en poids - rapportée à, respectivement exprimée sous forme de substance(s) sèche(s) - de polysaccharides à paroi cellulaire, en particulier issus du groupe de la ou des cellulose(s), hémi-cellulose (s), pectosane (s) , pectine (s) et/ou lignine (s).

2. Matérial d'emballage et/ou d'enveloppement selon la revendication 1, caractérisé en ce qu'il est traité de façon à lui donner une forme, le traitement se faisant sous l'effet de la pression et/ou de la température et/ou est constitué avec une masse de base ayant une teneur en eau maximale de 15 % en poids et/ou avec un produit de déchets ou un sous-produit végétal ayant une proportion d'au moins 50 % en poids - rapportée à, respectivement exprimée sous forme de substance(s) sèche(s) - de polysaccharides à paroi cellulaire et/ou de lignine(s).

3. Matérial d'emballage et/ou d'enveloppement selon la revendication 1 ou 2, caractérisé en ce que de 0,5 à 150 % en poids d'au moins un additif issu des plastifiants, charges et colorants compatibles avec la polysaccharide à paroi cellulaire sont intégrés dans la masse de base - chaque teneur étant rapportée au poids de substance(s) sèche(s).

4. Matérial d'emballage et/ou d'enveloppement selon l'une des revendications 1 à 3, caractérisé en ce que sa masse de base est constituée de la mousse obtenue avec le traitement de désagrégation, tel que cité à la revendication 1, connu en soi, de dépôts et/ou de déchets venant d'un pressage et/ou d'une mise sous forme de boue et/ou d'une extraction et/ou d'un éventuel autre traitement de matériaux bruts végétaux, de préférence par désagrégation de cossettes ou pulpes de betteraves à sucre, de résidus de transformation de fruits et de légumes, de résidus issus de la production de graisse et/ou d'huile à partir d'un matériau végétal, et/ou de pulpe de pommes de terre.

5. Matérial d'emballage et/ou d'enveloppement selon l'une des revendications 1 à 4, caractérisé en ce que sa masse de base présente une proportion de 10 à 100 % en poids, de préférence de 25 à 80 % en poids - chaque fois par rapport à la ou aux substance(s) sèche(s) - d'au moins un plastifiant issu du groupe du glycol, glycérine, éthylène glycol, propylène glycol, polyéthylène glycol, polypropylène glycol, polyol à faible poids moléculaire, monosucres, hydrates de carbone à faible poids moléculaire et oligosaccharides, respectivement de substances contenant les substances citées comme composants essentiels.

6. Matérial d'emballage et/ou d'enveloppement selon l'une des revendications 1 à 5, caractérisé en ce que sa masse de base présente de 5 à 50 % en poids d'au moins une charge issue du groupe des sels difficilement solubles, farines (amidon) et/ou de 0,01 à 5 % en poids d'au moins un colorant.

7. Procédé de fabrication de nouveaux matériaux d'emballage et/ou d'enveloppement décomposables biologiquement, à base de polysaccharides à paroi cellulaire selon l'une des revendications 1 à 6, le matériau de déchet végétal étant soumis à un traitement pour déchets de nature chimico-thermique et/ou enzymatico-thermique, caractérisé en ce que les produits de déchets et/ou sous-produits annexes, de préférence issus du groupe des cossettes ou pulpes de betteraves à sucre, résidus de pressage, résidus ou déchets issus de la transformation des fruits et légumes, pulpe de pommes et résidus de pressage et d'extraction venant de la production ou de la transformation de graisse et/ou d'huile issues de produits bruts végétaux, en présence ou après adjonction d'eau jusqu'à atteinte d'une solubilité dans l'eau de leurs polysaccharides à paroi cellulaire d'au moins 15 % en poids, sont soumis à au moins l'une des désagrégations citées, où en cas d'adjonction d'au moins un additif issu du groupe des plastifiants, charges et colorants, celle-ci s'effectue de préférence après la désagrégation citée, et en ce que l'ensemble de la masse de base (,,mousse") obtenue de cette manière et présentant une consistance en mousse est soumise à un façonnage destiné à lui donner une forme et à un processus de séchage visant à régler la teneur en eau.

**8.** Procédé selon la revendication 7, caractérisé en ce que la désagrégation chimico-thermique des produits de déchets et/ou sous-produits végétaux est effectuée par addition de solutions aqueuses d'acide minéraux et/ou d'acides orqaniques, une plage de pH allant de 0,5 à 6, de préférence de 1,0 à 3,0 étant réglée ou respectée, et le traitement thermique étant conduit à des températures comprises dans la plage allant de 50 à 200°C, de préférence de 70 à 130°C, pendant une durée de 5 minutes à 5 heures, de préférence de 1 à 2 heures.

**9.** Procédé selon la revendication 7, caractérisé en ce que la désagrégation enzymatico-thermique de la substance brute végétale est conduite avec un mélange enzymatique comprenant des hydrolases issus du groupe des celluloses, hémi-cellulases, glucanases et peptinases, à des températures comprises dans la plage allant de 25 à 80°C, de préférence de 40 à 70°C,

**10.** Procédé selon l'une des revendications 7 à 9, caractérisé en ce que les additifs issus des groupes cités dans la revendication 7 sont ajoutés en une quantité globale comprise dans la plage allant de 0,5 à 150 % en poids, chaque fois rapportée au poids de substances sèches, les quantités de plastifiants, charges et colorants, provenant des groupes cités dans les revendications 4 à 6, étant respectivement ajoutées suivant les quantités citées dans ces revendications.

**11.** Procédé selon l'une des revendications 7 à 10, caractérisé en ce que les produits de déchets et/ou sous-produits végétaux destinés à la fabrication d'une mousse sont soumis avant, pendant et/ou après la désagrégation à un broyage très fin, conduit par voie mécanique.

**12.** Procédé selon l'une des revendications 7 à 11, caractérisé en ce que le façonnage de formage et le séchage de la masse de base sont effectués séquentiellement ou de façon à se chevaucher au moins partiellement, temporellement.

**13.** Procédé selon l'une des revendications 7 à 12, caractérisé en ce qu'un façonnage de formage primaire ou secondaire, thermoplastique, de la masse de base est effectué avec un moulage par injection, un moulage-soufflage, un étirage profond ou un matriçage-estampage.

**14.** Procédé selon l'une des revendications 7 à 13, caractérisé en ce que le façonnage de formage et/ou le séchage est, respectivement, sont effectués à l'aide d'un séchoir à cylindre et/ou d'une extrudeuse.

**15.** Utilisation de produits de déchets et ou sous-produits végétaux pour la production de nouveaux matériaux d'emballage et/ou d'enveloppement décomposables biologiquement à base de polysaccharides à paroi cellulaire, selon l'une des revendications 1 à 6, suivant un procédé selon l'une des revendications 7 et 14.